# EUROPEAN PATENT APPLICATION

(11) **EP 4 696 836 A2**
(43) Date of publication of application: **18.02.2026**
(21) Application number: 25218446.0
(22) Date of filing: 08.12.2021
(51) Int. Cl.: D21H 21/34

(54) **USE OF NON-HALOGEN FIRE RETARDANT COMPOSITION FOR INDIRECT FIRE PROTECTION LAYERS ON SUBSTRATES**

(30) Priority: 09.12.2020 BE 202005898; 13.01.2021 EP 21151444
(62) Divisional of application: 21823907.7
(71) Applicant: Ecochem International NV, 2550 Olen (BE); Fritz Egger GmbH & Co. OG, 6380 St. Johann in Tirol (AT)
(72) Inventor: Wiehn, Helmut, 76831 Heuchelheim (DE); Daeseleire, Pieter, 2250 Olen (BE); Riepertinger, Manfred, 83093 Bad Endorf (DE); Herzog, Andreas, 6380 St. Johann in Tirol (AT)
(74) Representative: Brantsandpatents bv

(57) **Abstract**

The claimed invention relates to an improved method for imparting fire-retardancy on wood- and cellulose-based materials that can be employed in the production of furniture and in interior building construction, e.g. wood-based materials and panels, such as lumber (timber) and engineered wood, such as plywood, densified wood, fiberboard (e.g. medium-density fiberboard (MDF) or high-density fiberboard (HDF)), particle board (PB), oriented strand board (OSB), laminated timber, parallel strand lumber (PSL), laminated strand lumber (LSL) and oriented strand lumber (OSL), glued laminated timber (glulam), and laminated veneer lumber (LVL), as well as materials used in decorative interior finishing, such as decorative panels prepared from compact boards (CB) or compact laminates (CL).

## Description

The claimed invention relates to an improved method for imparting fire-retardancy on wood- and cellulose-based materials that can be employed in the production of furniture and in interior building construction, e.g. wood-based materials, such as lumber (timber) and engineered wood, such as plywood, densified wood, fiberboard (e.g. medium-density fiberboard (MDF) or high-density fiberboard (HDF)), particle board (PB), oriented strand board (OSB), laminated timber, parallel strand lumber (PSL), laminated strand lumber (LSL) and oriented strand lumber (OSL), glued laminated timber (glulam), and laminated veneer lumber (LVL), as well as materials used in decorative interior finishing, such as decorative panels. Such materials hereafter also are referred to as "substrates".

### [Description]

### [Technical Field]

The present invention provides an improved method for imparting fire-retardancy on wood- and cellulose-based materials that can be employed in the production of furniture and in interior building construction, e.g. wood-based materials, such as lumber (timber) and engineered wood, such as plywood, densified wood, fiberboard (e.g. medium-density fiberboard (MDF) or high-density fiberboard (HDF)), particle board (PB), oriented strand board (OSB), laminated timber, parallel strand lumber (PSL), laminated strand lumber (LSL) and oriented strand lumber (OSL), glued laminated timber (glulam), and laminated veneer lumber (LVL), as well as materials used in decorative interior finishing, such as decorative panels.

### [Technical Background]

Wood- and cellulose-based materials are widely used as construction materials and in the construction of furniture. Furthermore, decorative panels are commonly employed in the construction of furniture and in decorative interior finishing. From the aspect of safety in the case of fire, the materials have to satisfy high fire-retardancy standards.

The European standard DIN EN 13823 is widely accepted for comparing the fire-retardant properties of different materials. Somewhat older methods which nevertheless yield reliable results are ISO 5658-2 (2006) and UNI 9174 (2010). Based on these methods, classifications can be assigned to the materials (e.g. Euroclass according to DIN EN 13501-1 (2019-05)).

When following the Euroclass system, the classification of combustible materials, such as wood- and cellulose-based materials, e.g. wood-based panels and compact boards, is based on the results of a Single Burning Item (SBI) Test according to DIN EN 13823. Classification parameters of the SBI test are the fire growth rate index (*FIGRA*)*,* the lateral flame spread (*LFS*), the total heat release (*THR*₆₀₀ₛ), Smoke Growth Rate (SMOGRA) and Total Smoke Production (TSP). The FIGRA and THR indexes are the main factors on which the Euroclass rating depends.

To increase their fire-retardancy, wood- and cellulose-based materials can be treated with fire-retardant compositions and intumescent compositions. Fire-retardant compositions may slow the spread of a fire by absorbing energy that would otherwise serve the perpetuation of the combustion process. Intumescent compositions swell under the influence of heat to form a voluminous foam layer (intumescent char) that serves to insulate the substrate against heat, thereby slowing down pyrolysis of the substrate. Furthermore, the intumescent char prevents oxygen from contacting the substrate, thereby inhibiting combustion.

Typical intumescent compositions contain an acid donor, a carbon donor and a blowing agent. Upon exposure to heat, the acid donor decomposes to release an acid. The acid, in turn, catalyzes carbonization of the carbon donor to form a carbon layer, as well as decomposition of the blowing agent to release an inert gas. The inert gas acts to expand the carbon skeleton formed by carbonization of the carbon donor, thereby creating the intumescent char. As suitable acid donors, phosphates are known. As carbon donors, polyhydric alcohols or sugars may be employed. As blowing agent, nitrogenous compounds, such as dicyandiamide, melamine, urea or guanidine have been employed. Compositions using melamine as a blowing agent are known, for example, from US 2012/0295996 A1, US 6,989,113 B1 and WO 2018/122406 A1.

From environmental and economic standpoints it is desirable and advantageous to formulate water-based intumescent compositions, preferably compositions that are non-halogen. However, issues of solubility and compatibility have to be dealt with when trying to prepare such compositions.

Different methods have been described for the treatment of substrates, such as wood-based materials, e.g. wood-based panels or compact boards, with fire-retardant additives. A prevalent method involves the addition of fire-retardant additives to wood raw materials (e.g. strips, chips or fibers) prior to the formation of compressed panels, as described, for example, in DE 103 61 878 A1, EP 2 586 849 A2 and WO 2018/122406 A1. However, in such a method, large amounts of active agents are required, as the active agents ultimately are contained in the whole volume of the finished product. Furthermore, raw materials that have been treated using an aqueous solution may be vulnerable to subsequent leaching of the active agents. Finally, issues of compatibility between the active agents and adhesives or resins used for forming a product from the treated raw materials may also arise. US 2004 266 303 discloses a gypsum board faced with non-woven glass fibre mat.

A fire-retardant may be added as a granulate to wood particles in a case of preparing particle boards or added as a liquid suspension, dispersion or solution to fibers in a case of preparing fiberboards or oriented strand boards. In such cases, too, the compatibility between the active agents and the adhesive(s) may be an issue, and it is still necessary to employ large amounts of active agents.

Non-patent document 1 describes the use of a flame-retardant adhesive resin consisting of a mixture of ammonium polyphosphate (APP), pentaerythritol (PER) and a melamine-urea-formaldehyde resin (MUF) for preparing a flame-retardant decorated (FRD) plywood.

US 9 669 564 discloses a method aiming to confer the fire retardancy to wood and fire-retardant wood products. Said method comprises applying an aqueous fire-retardant impregnate to a wood product consisting of plywood or OSB.

As far as wood and cellulose-based substrates are concerned, little attention seems to have been paid to the application of fire-retardant and intumescent compositions as external coatings. In particular the treatment of such substrates with aqueous compositions does not seem to have been studied extensively. However, an example of an aqueous intumescent composition for coating substrates is described in WO 99/35196 A1.

Intumescent coatings that are based on mixtures of melamine-formaldehyde resins and partial phosphoric acid esters have been described in the literature, e.g., in DE 43 07 406 A1 and WO 99/35196 A1. Since partial phosphoric acid esters are comparably expensive, however, it would be desirable to find a means for lowering the use amount thereof or to be able to replace them altogether while maintaining adequate intumescent properties. Moreover, the application of a protective topcoat is recommended when applying coatings prepared using phosphoric acid esters, thereby adding further effort and costs. Avoiding the use of partial phosphoric acid esters also would be advantageous in view of their high degree of acidity.

In addition to potential compatibility issues, a method of applying a fire-retardant or an intumescent coating onto the surface of a substrate faces the obstacle of ensuring that the coating will not be overly deteriorated by handling operations and/or exposure to the elements. That is to say, contrary to a fire-retardant that is added to a raw material during the production process of a wood-based material, a fire-retardant or an intumescent composition that takes on the form of a coating needs to exhibit not only adequate stability, but also sufficient durability.

### Non-patent document 1:

Wu M, Song W, Wu Y, Qu W. "Preparation and Characterization of the Flame Retardant Decorated Plywood Based on the Intumescent Flame Retardant Adhesive" Materials (Basel). 2020 Feb 3; 13(3):676. doi: 10.3390/ma13030676. PMID: 32028679; PMCID: PMC7040706.

### [Objective]

The present inventors have sought to address the issues discussed above and to provide a means for imparting fire-retardancy on substrates, such as wood- and cellulose-based materials that can be employed in the production of furniture and in interior building construction and on materials used in decorative interior finishing, that is more effective than previous means, without having to make any sacrifices in regard to the fire-retardant and physical properties of the treated product.

Accordingly, an objective of the present invention is the provision of an improved method for imparting fire-retardancy on wood- and cellulose-based materials.

### [Summary of the Invention]

The claimed invention solves the identified problems by means of a method for imparting fire-retardancy on a substrate as described in the following.

By making use of the method for imparting fire-retardancy on a substrate as described in the following, materials exhibiting excellent fire-retardant properties can be obtained using only small amounts of active agents. In particular, the claimed invention achieves a notable reduction in the amounts of fire-retardants that are required for achieving a certain reaction-to-fire performance, such as a certain classification level in the Euroclass system, when compared to traditional methods and compositions. For example, the amounts of fire-retardants employed in preparing wooden composite boards of low flammability typically is on the order of 70-80 kg/m³, whereas the claimed invention only requires a fraction of this amount in order to attain comparable properties. This reduction in the required amounts of fire-retardants represents an improvement not only from an economic standpoint, but also from an ecological point of view. In addition, the composition is halogen-free. These compositions are generally considered safer, non-toxic and do not accumulate in the environment or in organisms.

Furthermore, by relying on a process of coating, rather than addition to a raw material, it becomes possible to separate the process of manufacturing the substrate from the process of treating the substrate with a fire-retardant. Thereby, a need to operate at low temperatures and to employ long pressing times when producing materials such as fire-retardant wood-based panels can be eliminated and productivity can be increased. Finally, the composition and method of the present invention make it possible to obtain a coating that is sufficiently stable and durable to allow for the use of the treated product in interior construction applications, thereby eliminating the need for applying an additional overcoating.

In particular, the present invention concerns a method according to claim 1. Further embodiments are described in the depending claims 2 to 16.

### [Description of the Figures]

In the following, the invention is explained by means of embodiment examples with reference to the drawing. The drawing shows
**Fig. 1** a layered structure of a plate to be produced with an impregnate according to the invention in an exploded view,
**Fig. 2** a layered structure of a pressed panel with the layered structure according to Fig. 1,
**Fig. 3** the plate shown in Fig. 2 after exposure to strong heat radiation,
**Fig. 4** a schematic representation of a plant for carrying out a first method according to the invention for producing impregnates and
**Fig. 5** a schematic representation of a plant for carrying out a second process according to the invention for producing an impregnate.

### [Detailed Description]

### [Aqueous resin solution (A)]

In the claimed invention, as an aqueous resin solution (A), aqueous melamine-formaldehyde resin solutions, aqueous melamine-urea-formaldehyde resin solutions, mixtures thereof and mixtures thereof with aqueous urea-formaldehyde resin solutions and/or aqueous phenol-formaldehyde resin solutions may be used.

The resin component contained in the aqueous resin solution (A) has dual functionality. On the one hand, the resin acts as a binder, which makes possible the formation of a stable coating. On the other hand, the melamine contained in the aqueous resin solution (A) acts as a blowing agent upon exposure to heat and thereby participates in the intumescent action of the coating. The dual functionality of the resin component makes it possible to eliminate the use of a polyvinyl acetate (PVA)/acrylate mixture, which previously has commonly been employed as a binder for intumescent compositions. Thus, a reduction of the overall number of components contained in the treated substrate is achieved and the probability of encountering incompatibilities among the components is lowered. Furthermore, it has been found that a melamine-based coating is more durable and resilient than a PVA-based coating.

Surprisingly, the present inventors have found that an intumescent coating exhibiting superior properties can be prepared using an aqueous resin composition. The reason therefore is believed to lie in the fact that, rather than being dispersed in the form of solid melamine particles having a comparatively large size in the mm or µm range, as is the case in commonly employed fire-retardant compositions, the melamine components are dissolved and thus exists in the form of solute particles having a size that is one or more orders of magnitude smaller than that of solid resin particles. The existence in dissolved form and the reduction in particle size that is associated therewith not only allow for a better distribution of the resin in the intumescent composition, but ultimately also serve to increase the reactivity of the intumescent coating, because the resin component exhibits a greater reaction surface and is more evenly distributed.

A further advantage resulting from the use of a melamine or melamine component solution, rather than a solid, lies in the fact that the acid donor (b) and carbon donor (c) will be encased by the resin during curing, thereby locking them into position, protecting them from any disturbances and cementing the homogeneous distribution of the components.

By ultimately being reflected in the intumescent coating, the homogeneous distribution of components that exists in the resin solution (A) makes possible the increased and more homogeneous reactivity that is observed when comparing the effectiveness of an intumescent coating as described herein to that of other intumescent coatings. In comparison to the prior art, the increased uniformity in the distribution of components allows the coating amount to be reduced while at the same time making possible the formation of an intumescent char that exhibits better structure and stability, thereby improving the overall fire-retardant properties of the treated substrate.

Aqueous melamine-formaldehyde resin solutions, aqueous melamine-urea-formaldehyde resin solutions, aqueous urea-formaldehyde resin solutions and aqueous phenol-formaldehyde resin solutions to be incorporated into the aqueous resin solution (A) can be obtained from the respective raw materials, i.e. melamine, formaldehyde, urea, and phenol, by methods commonly employed in the art, e.g. a method as described in EP 0 767 214 A1, wherein an aqueous mixture of the individual components is reacted to yield the resin solution and, if necessary, the solids content of the resin solution is adjusted by the further addition or removal of water.

Alternatively, commercially available resin powders or resin solutions may be used for preparing the aqueous resin solution (A). Examples of commercially available resin powders and aqueous resin solutions which may be used in the present invention include, but are not limited to, Kaurit^{®} (urea-formaldehyde type produced by BASF), Kauramin^{®} (melamine-formaldehyde and melamine-urea-formaldehyde type produced by BASF), Bakelite^{®} (phenol-formaldehyde type produced by Hexion GmbH), and Madurit^{®} (melamine-formaldehyde type produced by Prefere Resins).

The aqueous resin solution (A) as used in the claimed invention exhibits a total melamine content of from 20 to 45 wt.%, preferably from 25 to 35 wt.%, relative to the total weight of the aqueous resin solution (A). When the melamine content lies in this range, it is possible to form a uniform and stable coating using an aqueous intumescent composition (C) as described further below, thereby allowing excellent fire-retardant properties to be achieved while also allowing the coating to exhibit good durability and mechanical stability. When preparing the aqueous resin solution from the respective raw materials, the melamine content can be adjusted by varying the amount of melamine that is employed in the reaction. When employing commercially available resin powders or resin solutions, the melamine content thereof generally will be determined by the supplier. However, if necessary, it also is possible to determine a melamine content by a method as described in the database of the German Federal Institute for risk assessment (BfR)("Methodensammlung Papier, Karton und Pappe", Section 5: ".Bestimmung von Einzelsubstanzen", Subsection 5.3 "Melamin"; https://www.bfr.bund.de/cm/343/melamin-aus-melamin-formaldehydharz.pdf; accessed on November 17, 2020; also Frind, H.; Hensel, R.; Pommer, W: 3.4.1 Melamin aus Melamin-Formaldehydharz. In: Methoden zur Untersuchung von Papieren, Kartons und Pappen für Lebensmittelverpackungen. Göttingen: Erich Goltze 1982).

From the viewpoint of ease of handling and manipulation, the aqueous resin solution (A) preferably exhibits a solids content (a_{A}) of from 45 to 75 wt.%, more preferably from 50 to 70 wt.% and even more preferably from 55 to 65 wt.% relative to the total weight of the aqueous resin solution (A). The solids content is determined according to DIN 53216-1 (1989).

From the viewpoint of avoiding brittleness and/or improving the transparency of the coating, the aqueous resin solution (A) preferably is
- a mixture of an aqueous melamine-formaldehyde (MF) resin solution with an aqueous phenol-formaldehyde (PF) resin solution,
- a mixture of an aqueous melamine-formaldehyde (MF) resin solution with an aqueous urea-formaldehyde (UF) resin solution, or
- a mixture of an aqueous melamine-formaldehyde (MF) resin solution with an aqueous phenol-formaldehyde (PF) resin solution and a urea-formaldehyde (UF) resin.

In all of these cases, the mass ratio of a solids content (a_{MF}) derived from the aqueous melamine-formaldehyde resin to a solids content (ax) derived from all resin components other than the aqueous melamine-formaldehyde resin is preferably from 2:1 to 10:1, more preferably from 3:1 to 9:1 and even more preferably from 4:1 to 8:1.

### [Acid donor (b) and carbon donor (c)]

Examples of the acid donor (b) used in the claimed invention include ammonium polyphosphate, guanylurea phosphate, guanidine phosphate and mixtures thereof. One or more selected from the group consisting of ammonium polyphosphate, guanylurea phosphate and guanidine phosphate, and preferably one or more selected from the group consisting of ammonium polyphosphate and guanidine phosphate are used as the acid donor (b). This is done from the viewpoint of maximizing the fire-retardancy of the coating, while at the same time avoiding the use of compounds exhibiting a high degree of acidity. The use of the indicated compounds also is believed to minimize health and environmental risks.

Examples of the carbon donor (c) used in the claimed invention include glucose, arabinose and other monosaccharides; lactose, maltose and other disaccharides; starch, cellulose, dextrin and other polysaccharides; sorbitol, erythritol, pentaerythritol, dipentaerythritol, tripentaerythritol, mannitol and other polyhydric alcohols; and mixtures thereof. Preferably one or more selected from the group consisting of starch, cellulose, dextrin and other polysaccharides; sorbitol, erythritol, pentaerythritol, dipentaerythritol, tripentaerythritol, mannitol and other polyhydric alcohols, and mixtures thereof are used as the carbon donor (c). From the viewpoint of achieving a homogenous distribution of components, the carbon donor (c) more preferably is one or more selected from the group consisting of sorbitol, erythritol, pentaerythritol, dipentaerythritol, tripentaerythritol, mannitol and mixtures thereof, and even more preferably is one or more selected from the group consisting of sorbitol, pentaerythritol and dipentaerythritol. The use of the indicated compounds also is believed to minimize health and environmental risks.

The acid donor (b) and the carbon donor (c) typically are employed in the form of particulate powders, wherein at least 90% of the particles present have a particle size which is smaller than 100 µm, and preferably at least 90% of the particles have a particle size of less than 50 µm or at least 50% of the particles have a particle size of less than 10 µm. The average particle size of the powders can be determined by a laser diffraction method (ISO 13320 (2019)).

In the method and compositions of the claimed invention, the acid donor (b) and the carbon donor (c) are used at a mass ratio of acid donor (b) to carbon donor (c), (b):(c), of from 10:1 to 1:1, preferably from 8:1 to 1:1, more preferably from 6:1 to 1:1; even more preferably from 6:1 to 2:1, and most preferably from 5:1 to 3:1. When the mass ratio of acid donor (b) to carbon donor (c), (b):(c), falls within such a range, it is possible to form a uniform and stable coating using an aqueous fire-retardant composition (B) or an aqueous intumescent composition (C) as described further below, thereby allowing excellent fire-retardant properties to be achieved.

### [Method for imparting fire-retardancy]

The method for imparting fire-retardancy on a wood- or cellulose-based material that can be employed in the production of furniture, interior building construction or decorative interior finishing, the method comprises the following steps (1) and (2) of:
(1) introducing an acid donor (b) and a carbon donor (c) into an aqueous resin solution (A) to obtain an aqueous intumescent composition (C), wherein
   the aqueous resin solution (A) is selected from the group consisting of aqueous melamine-formaldehyde resin solutions, aqueous melamine-urea-formaldehyde resin solutions, mixtures thereof and mixtures thereof with aqueous urea-formaldehyde resin solutions and/or aqueous phenol-formaldehyde resin solutions; wherein
   the aqueous resin solution (A) exhibits a total melamine content of from 20 to 45 wt.%, preferably from 25 to 35 wt.% relative to the total weight of the aqueous resin solution (A);
   the acid donor (b) is selected from the group consisting of ammonium polyphosphate, guanylurea phosphate, guanidine phosphate and mixtures thereof;
   the carbon donor (c) is selected from the group consisting of glucose, arabinose and other monosaccharides, lactose, maltose and other disaccharides, starch, cellulose, dextrin and other polysaccharides, sorbitol, erythritol, pentaerythritol, dipentaerythritol, tripentaerythritol, mannitol or other polyhydric alcohols and mixtures thereof;
   the mass ratio of acid donor (b) to carbon donor (c), (b):(c), introduced into the aqueous resin solution (A) is in a range of from 10:1 to 1:1, preferably from 8:1 to 1:1, and more preferably from 6:1 to 1:1; and
   the acid donor (b) and the carbon donor (c) are introduced into the aqueous resin solution (A) in such an amount that a mass ratio of the solids content (a_{A}) of the aqueous resin solution (A), as determined according to DIN 53216, to the total amount of acid donor (b) and carbon donor (c), (a_{A}):((b)+(c)), is in a range of from 0.25:1 to 5:1, preferably from 0.30:1 to 2.5:1;
   the aqueous intumescent composition (C) exhibits a solids content (ac) of from 50 to 80 wt.%, preferably from 60 to 75 wt.%, relative to the total weight of the aqueous intumescent composition (C);
(2)
   a step of laminating one or more layers of an intumescent carrier and optionally a decorative paper onto the wood- or cellulose-based material in the named order,
   wherein the intumescent carrier comprises a kraft paper that has been subjected to coating with the aqueous intumescent composition (C).

### [Preparation of aqueous intumescent composition (C)]

In step (1) of the method for imparting fire-retardancy on a wood- or cellulose-based material that can be employed in the production of furniture, interior building construction or decorative interior finishing, the acid donor (b) and the carbon donor (c) are introduced into the aqueous resin solution (A) to obtain an aqueous intumescent composition (C).

Prior to their introduction into the aqueous resin solution (A), the acid donor (b) and the carbon donor (c) can be dispersed or suspended in water to form an aqueous fire-retardant composition (B). When doing so, the acid donor (b) and the carbon donor (c) can be added to the water separately or together. Subsequently, the aqueous fire-retardant composition (B) is added to the aqueous resin solution (A). As an alternative thereto, the acid donor (b) and the carbon donor (c) can be introduced into the aqueous resin solution (A) as particulate powders.

Water can be added simultaneously with or subsequently to the introduction of the fire-retardant component into the aqueous resin solution (A) in order to adjust the concentration of the components and/or the solids content of the aqueous intumescent composition (C) to a level desired for the intended field of application and the intended means for applying the intumescent composition (C).

When separately introducing the acid donor (b), the carbon donor (c) and, optionally, additional water, into the aqueous resin solution (A), this can be done simultaneously or successively.

The aqueous intumescent composition (C) is obtained as a result of the introduction of the acid donor (b) and the carbon donor (c) into the aqueous resin solution (A).

In order to attain a homogenous distribution of components, the aqueous resin solution (A) may be stirred during the introduction of the acid donor (b) and the carbon donor (c) or the addition of the aqueous fire-retardant composition (B). A type of mixer commonly employed in the art, such as a dispersion mixer or a propeller mixer may suitably be used for such stirring.

When the aqueous fire-retardant composition (B) is formed by introducing the acid donor (b) and the carbon donor (c) into water prior to introduction into the aqueous resin solution (A), then this is preferably done while stirring the water using a dispersion mixer. In this case, too, the introduction of the acid donor (b) and the carbon donor (c) can be carried out simultaneously or successively.

The aqueous fire-retardant composition (B) comprises, in total and relative to the total weight of the aqueous fire-retardant composition (B), 40 to 80 wt.%, preferably from 45 to 75 wt.%, and more preferably from 55 to 70 wt.% of the acid donor (b) and the carbon donor (c).

Optionally, the aqueous fire-retardant composition (B) and the aqueous intumescent composition (C) may further be made to comprise from 0.5 to 10 wt.%, preferably from 1 to 5 wt.%, relative to the total weight of the acid donor (b) and the carbon donor (c), of a functional compound selected from the group consisting of aluminosilicates, calcium and magnesium silicates, such as wollastonite or talcum, silicon dioxide, titanium dioxide, aluminium hydroxide, calcium and magnesium phosphate, and mixtures thereof. The functional compounds may be added to the aqueous fire-retardant composition (B) at the same time as the acid donor (b) and the carbon donor (c). In a case where the acid donor (b) and the carbon donor (c) are added directly to the aqueous resin solution (A) to form the aqueous intumescent composition (C), the functional compound may be introduced into the aqueous resin solution (A) separately or together with the acid donor (b) and the carbon donor (c).

The acid donor (b) and the carbon donor (c) are introduced into the aqueous resin solution (A) in such an amount that a mass ratio of the solids content (a_{A}) of the aqueous resin solution (A) to the total amount of acid donor (b) and carbon donor (c) being added, (a_{A}):((b)+(c)), is in a range of from 0.25:1 to 5:1, preferably from 0.30:1 to 2.5:1. This also holds true when introducing the acid donor (b) and the carbon donor (c) into the aqueous resin solution (A) in the form of the aqueous fire-retardant composition (B). When the mass ratio of a solids content (a_{A}) of the aqueous resin solution (A) to the total amount of acid donor (b) and carbon donor (c), (a_{A}):((b)+(c)), lies within the indicated ranges, it is possible to form a uniform and stable coating using the aqueous intumescent composition (C), thereby allowing excellent fire-retardant properties to be attained. Furthermore, the coating also will exhibit good durability and mechanical stability, thereby eliminating the need for applying an additional overcoating.

The aqueous intumescent composition (C) typically has a solids content (ac) of from 50 to 80 wt.%, preferably from 60 to 75 wt.% relative to the total weight of the aqueous intumescent composition (C). When the solids content (ac) of the aqueous intumescent composition (C) lies within the indicated ranges, the properties of the aqueous intumescent composition (C) will be such as to allow for good handling thereof. **In** particular, it will be possible to easily apply the aqueous intumescent composition (C) using methods and procedures commonly employed in the art.

Optionally, further additives (d), such as melamine, urea, a curing agent, a flow agent, a defoaming agent and a dye may be added to the aqueous intumescent composition (C).

The addition amount of the additives (d) is not limited, as long as the fire-retardant properties of the treated substrate are not impaired. However, the total addition amount of the additives (d) typically will not exceed 5 wt.% relative to the total weight of the aqueous intumescent composition (C).

The additives (d) may be added to the aqueous resin solution (A) prior to, simultaneously with, or after introduction of the acid donor (b) and the carbon donor (c). The additives (d) may also be mixed with the acid donor (b) and/or the carbon donor (c) at a stage prior to being combined with the aqueous resin solution (A).

In an embodiment, the flame-retardant additive is contained in the synthetic resin matrix in the form of solid particles. The use in the form of particles improves the processability. The particles have an average particle size of 1 to 500 µm, preferably 5 to 250 µm, particularly preferably 10 to 100 µm.

Materials that can be treated with the aqueous intumescent composition (C) ("substrates") include, but are not limited to, materials employed in the production of furniture and in interior building construction, e.g. wood-based materials, such as lumber (timber) and engineered wood, such as plywood, densified wood, fiberboard (e.g. medium-density fiberboard (MDF) or high-density fiberboard (HDF)), particle board (PB), oriented strand board (OSB), laminated timber, parallel strand lumber (PSL), laminated strand lumber (LSL) and oriented strand lumber (OSL), glued laminated timber (glulam), and laminated veneer lumber (LVL), plastic-reinforced substrates such as wood-based insulation panels or wood plastic composites as well as materials used in decorative interior finishing. Aside from wood-based materials, the aqueous intumescent composition (C) may also be used for treating other materials to which fire-retardant coatings commonly are applied, as long as these materials are compatible with aqueous systems.

The composition is halogen-free. The need for halogen-free compositions is currently high, as halogen containing compositions are considered toxic, and can leach into the environment. In addition, they are generally not degradable. Providing compositions that are halogen-free thus ensures a safer way of passive fire protection.

### [Application of the aqueous intumescent composition (C)]

In step (2) of the method for imparting fire-retardancy, the aqueous intumescent composition (C) is applied to the substrate. This may be done by methods and procedures commonly employed in the art, for example, by spraying, pouring, squeegee coating, roller coating or brush coating.

The applied coating will dry and cure on its own at room temperature. However, the process may also be accelerated by employing convective and/or radiation heat transfer means, such as a heat gun or a drying lamp. It also is possible to include a curing agent in the aqueous intumescent composition (C) in order to speed up the curing process.

During the curing process, crosslinking of the resin component will occur, thereby encapsulating the acid donor (b) and the carbon donor (c) with the melamine of the resin and locking them into position within the coating. Thereby, a durable coating wherein the homogeneous distribution of the components is cemented, and the components simultaneously are protected from any disturbances is formed.

The coating may be applied to one or more sides of the substrate. When doing so, the coating amount applied to any given side preferably lies in a range of from 40 to 400 g/m², more preferably in a range of from 60 to 200 g/m² and even more preferably in a range of from 80 to 150 g/m² in terms of the total amount of acid donor (b) and carbon donor (c).

The present inventors have found that a coating amount of 40 to 150 g/m² in terms of the total amount of acid donor (b) and carbon donor (c) is sufficient for most fields of application to allow the treated substrate to exhibit excellent fire-retardant properties. For specialized applications or to achieve exceptional fire-retardant properties, coating amounts in terms of the total amount of acid donor (b) and carbon donor (c) of 150 g/m² and more can be employed. For example, one may consider increasing the coating amount when applying the aqueous intumescent composition (C) to materials that are intended for roofing applications in order to increase the amount of intumescent char that will be formed upon exposure to fire. This will help to ensure that the joints between the roofing elements will be fully covered by the intumescent char and a fire is prevented from spreading to the insulating material sitting behind the roofing elements, which typically consists of highly flammable polyurethane or polyisocyanurate foams. The increased coating amount also will allow a significant reduction in the burn-through rate to be achieved.

Depending on the substrate, it may be necessary to divide the step (2) of applying the aqueous intumescent composition (C) into two or more steps of successively applying coating layers comprising a smaller amounts of the aqueous intumescent composition (C) in order to obtain a uniform and high-quality coating, especially when applying coating amounts approaching the value of 400 g/m². Such a strategy of repetitive application may, of course, be employed for any substrate or coating amount. If two or more layers of coating are applied to the substrate, an applied coating layer should be left to dry and cure prior to the application of the subsequent coating layer.

In the case of employing the aqueous intumescent composition (C) for fire-proofing wood-based decorative panels, the intumescent coating is applied to the panel substrate prior to application of a decorative paper. When evaluating the fire-retardant properties of decorative panels treated in such a manner, the present inventors observed that parts of the decorative paper making up the outer surface of the decorative panels may chip of during exposure to fire. It was also found that part of the intumescent coating may be carried off with the decorative paper chippings.

It is possible to make up for a potential loss of intumescent coating due to the chipping off of parts of a decorative paper by using higher coating amounts when employing the aqueous intumescent composition (C) for fire-proofing decorative panels. However, the present inventors also have developed an alternative means for ensuring that adequate fire-retardant properties are retained in spite of the possible chipping off during exposure to fire. In this approach, the aqueous intumescent composition (C) is not applied directly to the panel substrate, but rather one or more layers of an intumescent carrier, such as a kraft paper that has been subjected to coating with the aqueous intumescent composition (C), are applied to the panel substrate prior to application of the decorative paper. When one or more layers of the intumescent carrier are located in between the panel substrate and the decorative paper, it is possible to prevent a loss of fire-retardant properties of the decorative panel due to the chipping off of parts of a decorative paper. Furthermore, this approach also allows the range of materials that can be treated to be expanded so as to include hydrophobic substrates, e.g. compact boards (CB) and compact laminates (CL), such as high-pressure laminates (HPL) and continuous pressure laminates (CPL).

**In** the following, the approach making use of an intumescent carrier will also be referred to as "indirect coating method".

**In** the indirect coating method, in step (2), a kraft paper (hereafter also referred to as "base material for the intumescent carrier") is subjected to coating with the aqueous intumescent composition (C), followed by lamination of one or more layers of the intumescent carrier onto a substrate, together with a decorative paper.

The types of kraft paper that may be used as base material for the intumescent carrier are not specifically limited, and any kraft paper commonly employed in the art may be used. An example thereof is soda kraft paper. Commercially available kraft papers, e.g. a Starkraft^{®} brand as offered by Zellstoff Pöls AG or papers offered by APV Germany GmbH may be used. Such kraft papers typically exhibit a grammage ranging from 40 to 300 g/m². From the standpoint of ease of handling and manipulation of the kraft paper before and after being subjected to coating with the aqueous intumescent composition (C), the grammage of the kraft paper preferably will lie in the range of from 60 to 200 g/m² and more preferably in the range of from 80 to 150 g/m². When the grammage of the kraft paper lies within the indicated ranges, it also is possible to apply high amounts of acid donor (b) and carbon donor (c) when subjecting the kraft paper to coating with the aqueous intumescent composition (C).

**In** the following, the kraft paper which has been subjected to coating with the aqueous intumescent composition (C) also will be referred to as "treated kraft paper".

**In** order to enable easy lamination of the intumescent carrier with the substrate and the decorative paper, the base material for the intumescent carrier may be impregnated with a binder resin prior to being subjected to coating with the aqueous intumescent composition (C). As a binder the same aqueous resin solutions (A) as described above, such as aqueous melamine-formaldehyde resin solutions, aqueous melamine-urea-formaldehyde resin solutions, aqueous urea-formaldehyde resin solutions and/or aqueous phenol-formaldehyde resin solutions, may be used. However, the binder is not limited to such resin solutions, and any binder which does not impair the application of the aqueous intumescent composition (C) may be used. The type and amount of the binder resin to be impregnated can be varied according to the intended substrate and the type of decorative paper to be employed, but an impregnation amount typically will lie in the range of from 40 to 400 g/m².

Machines such as those produced by the company Vits may be employed for carrying out the impregnation of the base material for the intumescent carrier with the binder resin and the coating with the aqueous intumescent composition (C). In particular, an apparatus as described, for example, in DE 198 14 212 C1, DE 199 01 525 A1, or DE 199 46 325 A1 may be employed. When using such an apparatus, the amount of binder that is impregnated into the base material for the intumescent carrier and the amount of aqueous intumescent composition (C) that is coated thereon can be regulated by adjusting the operating parameters of the apparatus.

In a case where the base material for the intumescent carrier is impregnated with a binder resin prior to being subjected to coating with the aqueous intumescent composition (C), the impregnation of the base material for the intumescent carrier with the binder resin and the coating with the aqueous intumescent composition (C) can be carried out as successive steps of a single process. This may be done by using an application system for liquid overlay, for example, an ARP-coater.

Although a coating with the intumescent composition on both sides of the base material for the intumescent carrier theoretically is possible, the inventors surprisingly have found that the best fire-retardant properties are attained when subjecting only one side of the base material for the intumescent carrier to coating with the aqueous intumescent composition (C) and further arranging the intumescent carrier in such a manner as to make the intumescent-coated side thereof face away from the substrate.

From the viewpoints of ease of handling and manipulation and of attaining optimal fire-retardant properties, the amount of the aqueous intumescent composition (C) coated on the base material for the intumescent carrier preferably lies in the range of from 30 to 200 g/m², more preferably in the range of from 40 to 150 g/m², and even more preferably in the range of from 60 to 120 g/m² in terms of the total amount of acid donor (b) and carbon donor (c).

The types of decorative papers that may be used when preparing a fire-retardant decorative panel by the indirect coating method are not specifically limited, and any decorative paper that is commercially available and commonly employed in the art may be used.

Depending on the ultimately intended use of the decorated panel, a combination of one or more layers of the intumescent carrier and a decorative paper can be laminated onto one or both sides of the substrate. When doing so, the intumescent-coated side of each intumescent carrier layer is made to face away from the substrate. Surprisingly, the inventors have found that such an arrangement will yield the best fire-retardant properties.

If a decorative paper is to be applied on one side of a substrate only, a counteracting paper may be laminated to the other side of the substrate in order to prevent warping.

Methods and conditions commonly employed in the art may be used to prepare the laminate. Furthermore, in a case of preparing fire-retardant decorative panels on the basis of compact boards (CB) and compact laminates (CL), the process of applying the intumescent carrier and the decorative paper can also be combined with the process of producing the substrate. In such a case, the laminate can be prepared by stacking the elements of which the laminate is to consist (substrate or resin-impregnated core papers from which a compact board or compact laminate can be formed, intumescent carrier and decorative paper) and subsequently passing the assembly of elements through a press. The exact processing conditions will vary depending on the nature of the substrate and the decorative paper, but do not go beyond those commonly employed in the art.

Examples of layer arrangements that may be realized when preparing a decorative panel are given in the following. However, the claimed invention is not limited thereto.
**A)** decorative paper
   one or more layers of intumescent carrier
   substrate
   one or more layers of intumescent carrier
   decorative paper
**B)** decorative paper
   one or more layers of intumescent carrier
   substrate
   counteracting paper

Parts of the intumescent carrier may become detached if parts of the decorative paper chip off during exposure to fire. **In** view thereof, the use of more than one layer of an intumescent carrier is preferable from the standpoint of optimizing the fire-retardant properties of a decorative panel. Even more preferred is the use of multiple layers of intumescent carriers containing differing amounts of intumescent coating, wherein the layers are arranged in a manner such that the amount of intumescent coating on neighboring layers successively decreases from the layer adjoining the substrate to the layer adjoining the decorative paper, thereby effectively establishing a concentration gradient. For example, in a case of employing two layers of intumescent carrier, the layer adjoining the decorative paper may be made to comprise a coating amount of 40 g/m² in terms of the total amount of acid donor (b) and carbon donor (c) and the layer adjoining the substrate may be made to comprise a coating amount of 60 g/m² in terms of the total amount of acid donor (b) and carbon donor (c).

The use of an intumescent carrier for improving the fire-retardancy of a substrate offers the further advantage of allowing the range of application to be expanded. Namely, the use of an intumescent carrier makes it possible to also use hydrophobic substrates, e.g. compact boards (CB) and compact laminates (CL), such as high-pressure laminates (HPL) and continuous pressure laminates (CPL).

The use of an intumescent carrier for improving the fire-retardancy of a substrate also offers the further advantage of it being possible to produce the intumescent carrier at a location that is different from the location at which a laminate comprising the intumescent carrier is prepared and/or a location that is different from the location at which a treated product is to be employed or further processed. Thus, the weight and volume of a material to be transported and, consequently, also the transport costs, can be reduced by shipping only the intumescent carrier to the site at which a laminate comprising the intumescent carrier is to be employed and at which an untreated substrate already is present, rather than having to ship the treated product. Furthermore, the packaging and transport of the intumescent carrier may be simpler than that of a treated product or of components required for forming an intumescent composition.

The indirect coating method can also be extended so as to make use of an intumescent composition other than the aqueous intumescent composition (C) as described above. That is to say, the further advantages described above can be attained when the intumescent carrier is subjected to coating with any intumescent composition comprising an acid, a charring agent and a blowing agent. Suitable acid sources, charring agents and blowing agents are an acid donor (b), a carbon donor (c) and an aqueous resin solution (A) as described above.

In a particularly preferred embodiment, the invention pertains to a fire-retardant product comprising a wood or natural fiber-based board or panel onto which an intumescent carrier has been laminated, wherein said intumescent carrier comprises a kraft paper that has been subjected to an intumescent coating, the coating comprising a melamine containing resin such as MF or MUF resin, a carbon donor chosen from erythritol, pentaerythritol, dipentaerythritol, tripentaerythritol and an acid donor chosen from ammonium polyphosphate and guanidine phosphate. Preferably, said melamine containing resin is a pre-condensed resin. In a further preferred embodiment, the coating or composition coated onto the carrier will be applied at a concentration of from 20 to 100 g/100 g carrier, preferably in the range of from 20 to 75 g/100 g carrier, and more preferably in the range of from 25 to 50 g/100 g carrier.

In an embodiment, a wood- or cellulose based material such as board material is produced by pressing wood- or cellulose based chips. In a subsequent step, the one or more layers of an intumescent carrier and optionally a decorative paper are respectively laminated onto produced wood- or cellulose-based material.

In another embodiment, lamination of said layers can occur simultaneously with the production of the wood- or cellulose based material by means of pressing wood- or cellulose-based chips. In an embodiment the method for laminating a substrate with an intumescent carrier subjected to coating with the aqueous intumescent composition (C), comprises simultaneously inserting a chip cake, an intumescent carrier and a decorative paper into a roll press. Said chip cake is comprised of a mixture of wooden chips and resin. The width of the end-product will be determined by the roll press used. The thickness will depend on specific settings and is directly linked to the desired thickness of the end product. Said intumescent carrier and if present, also the decorative layer, will be provided with an adhesive resin on the side facing either the chip cake (for the carrier) or the side eventually facing the intumescent carrier (for the decorative layer). In a next step, all elements will be introduced into a roll press and pressing them to form a thin chipboard. The adhesives dissolve under the action of temperature and are absorbed by the chipboard layer. The roll press may consist of two rollers assigned to each other, at least one of which is wrapped by a steel band which serves as a bearing surface for the glued chipboard material to be pressed between the two or more rollers. One of said rollers can have a radius of 1-3 m. In this process, to avoid changes in the intumescent carrier to the point of being unusable, the roll press is operated at a low temperature. The processing temperature should be in the range of 100 to 160 degrees Celsius, but temperatures between 130 and 150 degrees Celsius are particularly suitable. In this case, the moisture present in the chip cake escapes during the manufacturing process on the side facing away from the intumescent carrier. The remaining moisture content adjusts to the ambient humidity within a short time after the manufacturing process. The thin chipboard can be manufactured very quickly and inexpensively when the process is used, since post-processing of a conventionally manufactured chipboard by subsequently gluing on an intumescent carrier is avoided.

### [Preparation of intumescent carrier comprising a kraft paper]

In another aspect, the invention relates to a method for the preparation of an intumescent carrier comprising a kraft paper, which kraft paper is provided with an intumescent based flame retardant additive, preferably a mixture of a carbon source, a catalyst and a propellant.

In an embodiment, the flame retardant additive is provided in the form of particles of a solid material, and in which the particles preferably have an average particle size of 1 to 500 µm, preferably of 5 to 250 µm, particularly preferably of 10 to 100 µm.

In an embodiment, the flame retardant additive is incorporated, more preferably dispersed, into an impregnating resin, in which the kraft paper is wetted with the impregnating resin provided with a flame-retardant additive and in which the kraft paper is dried.

In an embodiment, the flame retardant additive is incorporated in an amount of from 10 to 80%, preferably from 25 to 70%, particularly preferably from 40 to 60%, based on the solids content of the impregnating resin.

In an embodiment, the kraft paper when in a dry state is wetted with the impregnating resin provided with a flame-retardant additive.

In an embodiment, the kraft paper, after initial pre-impregnation with an impregnating resin, is wetted while still wet with the impregnating resin provided with a flame-retardant additive.

In an embodiment, the kraft paper is provided with an initial pre-impregnation and subsequently dried, and wherein the kraft paper is wetted with the impregnating resin provided with a flame-retardant additive.

In an embodiment, the wetting with the impregnating resin provided with a flame-retardant additive takes place on both sides.

In an embodiment, the kraft paper after impregnation with an impregnating resin, is sprinkled with the flame-retardant additive in the form of solid particles while still wet, and in which the wetted kraft paper is dried.

In an embodiment, the kraft paper is impregnated with an impregnating resin, in which a first drying step is carried out and in which the kraft paper is subsequently wetted with an impregnating resin and in which the kraft paper is sprinkled with the flame-retardant additive in the form of solid particles while still wet.

In an embodiment, the flame-retardant additive is incorporated, in particular dispersed, into an impregnating resin, in which the kraft paper is combined with the flame retardant additive is applied to the impregnating resin, in which a flame retardant additive is provided in the form of solid particles, in which the flame retardant additive is scattered onto the kraft paper in the form of solid particles, and in which the wetted kraft paper is dried.

In an embodiment, said intumescent carrier is as defined in any one of the embodiments above.

### [Advantages of the claimed invention]

The claimed invention thus provides an improved method for imparting fire-retardancy on a substrate.

The claimed invention makes it possible to eliminate organic solvents when formulating fire-retarding compositions, thereby reducing the environmental impact.

At the same time, it allows for a better distribution of components to be achieved in an aqueous intumescent composition (C), reducing the overall amount of materials, and in particular the amount of an acid donor (b) and a carbon donor (c), that are required in order to imbue a substrate with a certain degree of fire retardancy. This improvement serves to further reduce the environmental impact and also reduces associated costs.

The aqueous resin solution that is employed to prepare the aqueous intumescent composition (C) principally can be the same as a resin solution that is employed as a binder in the production of such products as particle boards or oriented strand boards, thereby making it possible to rely on a raw material that already is present at a production site for preparing the aqueous intumescent composition (C) and to only have to further acquire the fire-retardant composition (B) or the components for preparing such a composition when wanting to directly treat such substrates at their site of production. Only having to deal with the components for preparing the fire-retardant composition (B) further offers the advantage of being able to operate with solids or a mixture thereof exhibiting a high degree of storage stability.

The aqueous intumescent composition (C) offers the advantage of being easy to handle, manipulate and apply. Furthermore, the coating formed therefrom, wherein the acid donor (b) and carbon donor (c) are encased by a resin, combines stability and durability with superior fire-retardant properties.

An advantage of the claimed invention over a method wherein a fire-retarding composition is added into a raw material, such as during the production of a wood-based panel, lies in being able to make use of any customary material as substrate. This also means that the conditions for producing the substrate do not have to take into account the presence of a fire-retarding composition or an intumescent composition and thus are not limited thereby. **In** contrast to the method of the present invention, a prior art process wherein fire-retardant additives are incorporated while producing the substrate itself will require changeover times, lower temperatures and lower processing speeds, thereby causing reduced productivity. Furthermore, the incorporation of fire-retardant additives during the production of the substrate as carried out in the prior art generally will result in requiring the substrates to exhibit higher density and special glues having to be employed in order for the product to exhibit satisfactory mechanical properties.

Separating the preparation of the intumescent composition from that of the product to be treated also allows the ratio of the resin component to the fire-retardant components, i.e. the acid donor (b) and the carbon donor (c), to be optimized, since the resin contained in the intumescent composition is not required to serve the additional function of holding together the components making up the substrate.

Following an indirect coating method of first applying the aqueous intumescent composition (C) to a base material for an intumescent carrier, allows expand the range of materials that can be treated to be expanded so as to include hydrophobic substrates, thereby making it possible to also prepare fire-retardant decorative panels on the basis of compact boards (CB) and compact laminates (CL). Thus, the aqueous intumescent composition (C) is suitable not only for treating materials that are to be used in construction projects, but also is broadly applicable to the areas of furniture construction and decorative interior finishing.

The indirect coating method also provides the further advantage of it being possible to produce the intumescent carrier at a location that is different from the location at which a laminate comprising the intumescent carrier is assembled and/or a location that is different from the location at which a treated product is to be employed or further processed.

Advantageously, the flame retardant additive is provided in the form of solid particles, wherein preferably the particles have an average particle size of from 1 to 500 µm, preferably from 5 to 250 µm, particularly preferably from 10 to 100 µm. These particle sizes have proven to be suitable in connection with the cellulose-based material and to be particularly advantageous. **In** particular, such solid particles are easy to handle and process.

**In** the following, the claimed invention will be exemplified by specific Examples. However, these Examples are not intended to limit the claimed invention in any manner.

### [Figure description]

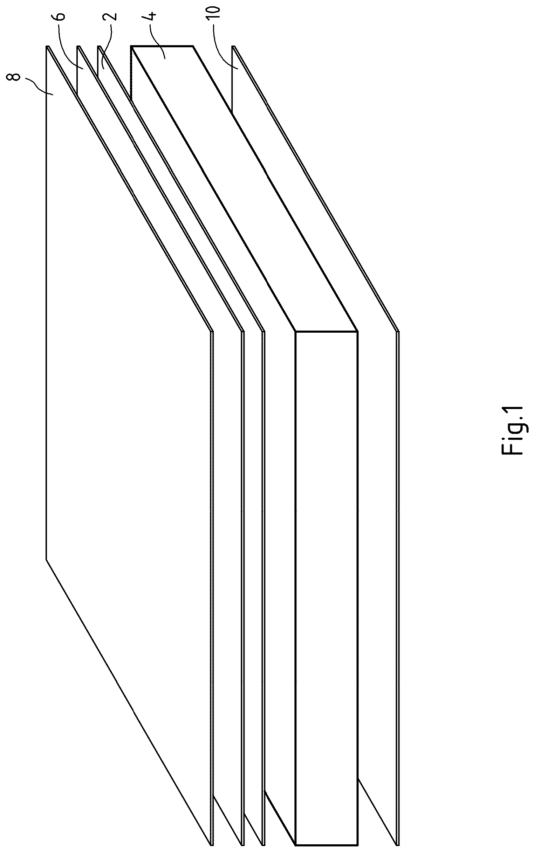

**Fig. 1** shows an impregnate **2** as part of a layered structure, wherein the impregnate **2** consists of a kraft paper, i.e. a cellulose-based material. The kraft paper has been partially impregnated during an impregnation process with a aqueous intumescent composition as described herein. The additive is an intumescent-based flame retardant that can expand and form a protective layer when exposed to high temperature due to foam formation.

The structure according to Fig. 1 also shows a carrier board **4** made of a wood-based material, in this case a high-density fibreboard (HDF), and a decorative layer **6,** above which an overlay layer **8** is arranged. Finally, below the carrier plate **4** is a counter-tension layer **10** to compensate for tensions within the layer structure in the event of thermally induced changes within the layer structure.

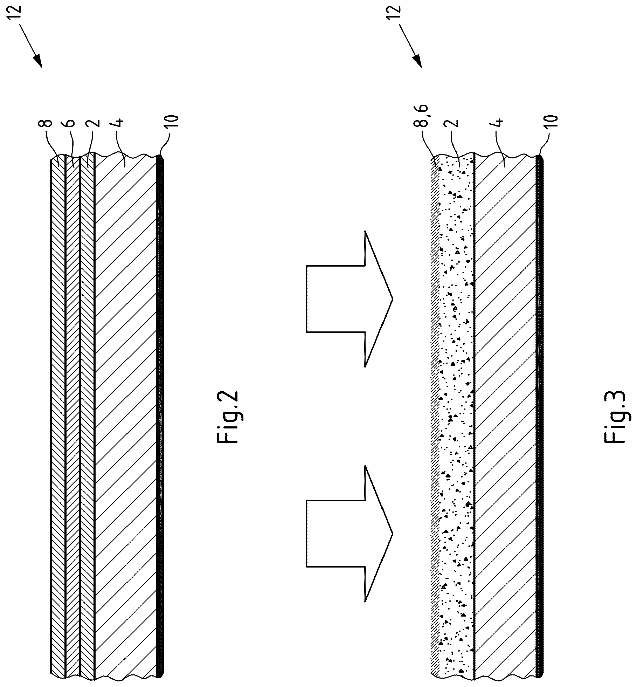

**Fig. 2** shows the pressed panel **12,** which consists of the components shown in Fig. 1, in a ready-to-use state in a partial side view. The individual layers **2** to **10** stacked on top of each other are shown by horizontal stripes.

**Fig. 3** shows the same plate as in Fig. 2 after a strong heat radiation has acted on the plate. The heat radiation is shown in the form of two wide arrows pointing vertically downwards. The thermal radiation has heated up the layer structure so that the impregnate **2** containing intumescent-based additive has inflated, which has significantly increased the volume of the impregnate **2.** Due to the change in shape, the decorative layer **6** and the overlay layer **8** have disintegrated into individual parts and lie above the foamed impregnate **2.**

Due to the strong change in volume of the impregnate **2,** the underlying layers of the carrier plate **4** and the backing layer **10** are at least partially protected from the effect of thermal radiation, whereby the desired fire protection effect is achieved.

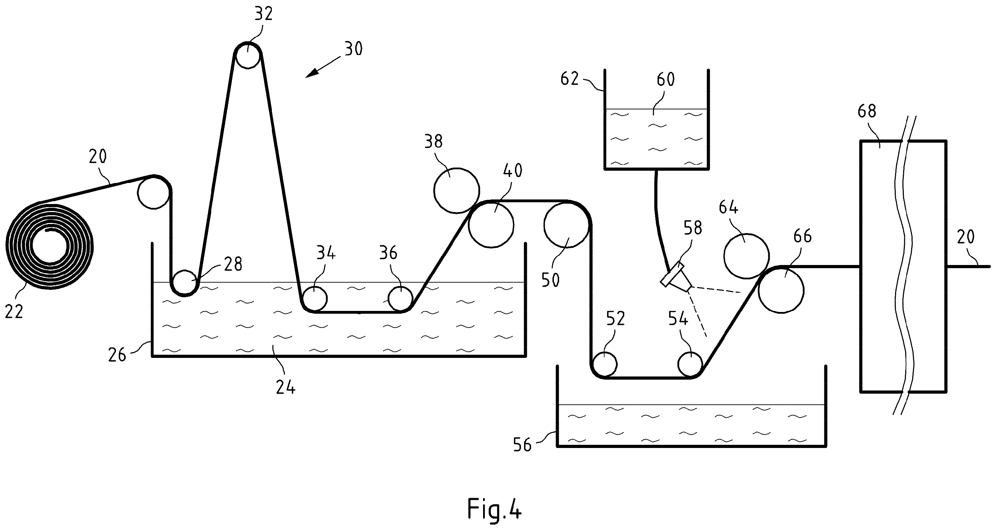

**Fig. 4** shows a schematic representation of a possible system for carrying out a process for the production of an impregnate according to the invention based on a soda kraft paper intended for use as a core layer.

Basically, a soda kraft paper with a non-resin grammage of 120 g/m² coated with an intumescent flame retardant additive, was introduced as a powder into an impregnating resin liquid.

The powder has a particle size in the range < 50µm (at least 85% by mass have a particle size < 50µm, preferably at least 90%, particularly preferably at least 90%, at least 95%). Also possible are kraft papers with a basis weight of 40 to 80 g/m² or also between 20 and 280 g/m².

As Fig. 4 shows, the soda kraft paper **20** is unrolled from a roll **22** and, in a first step, is first core impregnated. This is done with an unfinished impregnating resin **24,** which is present in a tub **26.** It is the same impregnation resin that is used later with the addition of flame-retardant additives. The core impregnation of the paper **20** is done by guiding it along a half circumference of a roller **28** of the impregnation unit, which is immersed approximately halfway into the tub **26** with liquid impregnating resin **24.** The resin then penetrates along the so-called breathing path **30** from one side to the other of the paper to prevent air pockets, i.e. to achieve complete core impregnation. The breathing path **30** is formed by a deflecting roller **32** so that the impregnated paper **20** is first guided upwards and then downwards again over a predetermined distance.

After the breathing section **30,** the paper web **20** is again guided through the tub **26** by means of two rollers **34** and **36,** again impregnated with the impregnating resin **24** and then in a defined nip of two rollers **38** and **40,** excess resin is stripped off, resulting in a basis weight of paper weight and remaining resin quantity of 190 g/m², measured after drying, i.e. including a residual moisture of approx. 6.5% measured after storage at 120°C for 10 minutes.

After the core impregnation has been completed, after the nip of the two rollers **38** and **40,** further rollers **50, 52** and **54** feed the wet paper web above a receptacle **56** to a nozzle **58.** The nozzle **58** is used for one-sided spraying of the paper web **20** with the impregnating resin **60** which is equipped with flame-retardant additives and which is supplied from a tank **62.**

The infiltrated impregnating resin **60** is also dosed by means of a nip of two rollers **64** and **66** so that, after drying in a drying section 68, the impregnated paper web **20** has a basis weight of 400 g/m² with a residual moisture of approx. 6.5% (paper weight, dried impregnating resin with additive and residual moisture).

This means that an application quantity of the flame retardant additive is impregnating resin with a weight per unit area of approx. 210 g/m². With a proportion of flame-retardant additives of 45% based on the solid resin content of the impregnating resin. The result is a quantity with a weight per unit area of approx. 89 g/m².

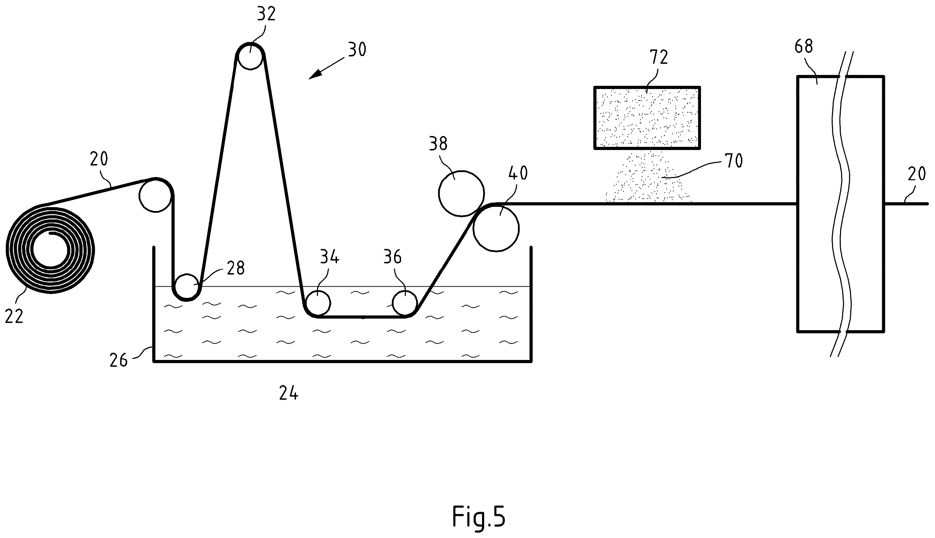

**Fig. 5** shows a system with which the production of an impregnate for the use as a decorative layer can be carried out by sprinkling on a flame-retardant additive as a fire protection agent. The structure of the pre-impregnation section and drying section is the same as in Fig. 4.

A decorative paper **20** with a basis weight of 65 g/m² is applied after one-sided wetting with an impregnating resin **24** in the tub **26** and a breathing section **30,** the decorative paper **20** is passed through the tub **26** again, whereby it comes into contact with the impregnating resin from both sides. A subsequent nip of rollers **38** and **40** is adjusted so that the basis weight of the impregnate dried to a residual moisture of approx. 6.5% is 140 g/m².

After the nip of the rolls **38** and **40,** the flame-retardant additive **70** is spread on the upwardly oriented underside of the wet paper web **20** as a fire retardant by means of a spreading unit **72,** the quantity of additive **70** being metered in such a way that a weight per unit area of 120 g/m² additives is applied. Subsequently, the treated paper web **20** is led through the drying section **68** in the form of a drying channel and dried to a residual moisture of approx. 6.5%.

### [Examples]

### Preparation of aqueous fire-retardant composition (B) and aqueous intumescent composition (C)

### Example 1

80 parts by weight of ammonium polyphosphate (APP SD2 -Ecochem) were mixed with 20 parts by weight of pentaerythritol (Penta F40 - Ecochem). 65 parts by weight of the obtained mixture were alternatingly combined with 35 parts by weight of deionized water, followed by mixing with a dispersion mixer for 10 minutes, so as to obtain an aqueous fire-retardant composition (B) in the form of a suspension.

65 parts by weight of Kauramin^{®} 650 having a melamine content of 55% were mixed into 35 parts by weight of deionized water to obtain an aqueous resin solution (A) having a melamine content of about 36% and a solids content (a_{A}) of 65%.

An aqueous intumescent composition (C) was prepared by mixing the aqueous fire-retardant composition (B) into the aqueous resin solution (A) under stirring in an amount so as to realize a mass ratio (a_{A}):((b)+(c)) (solids content derived from the aqueous resin solution (A) to fire-retardant component derived from the aqueous fire-retardant composition (B)) of 1:1.3.

### Example 2

80 parts by weight of ammonium polyphosphate (APP SD2 -Ecochem) were mixed with 20 parts by weight of pentaerythritol (Penta F40 - Ecochem) to obtain a fire-retardant component.

65 parts by weight of Kauramin^{®} 650 (BASF) having a melamine content of 55% were mixed into 35 parts by weight of deionized water to obtain an aqueous resin solution (A) having a melamine content of about 36% and a solids content (a_{A}) of 65%.

A dispersion mixer was used to mix the fire-retardant component, the aqueous resin solution (A) and water in amounts so as to yield an aqueous intumescent composition (C) comprising 35% of water and exhibiting a mass ratio (a_{A}): ((b)+(c)) (solids content derived from the aqueous resin solution (A) to fire-retardant component) of 1:1.3.

### Example 3

An acid donor composition was prepared by mixing the types and relative amounts of acid donor components and the functional compound silicon dioxide as indicated in Table 1.

A carbon donor composition was prepared by mixing the types and relative amounts of carbon donor components as indicated in Table 1.

80 parts by weight of the acid donor composition were mixed with 20 parts by weight of the carbon donor composition. 65 parts by weight of the resulting mixture were alternatingly combined with 35 parts by weight of deionized water, followed by mixing with a dispersion mixer for 10 minutes, so as to obtain an aqueous fire-retardant composition (B) in the form of a suspension.

An aqueous resin composition (A) having a melamine content of about 29% and a solids content (a_{A}) of 65% was prepared by mixing 52 parts by weight of Kauramin^{®} 650 (BASF) having a melamine content of 55% and 13 parts by weight of Kaurit^{®} 390 (BASF) with 35 parts by weight of deionized water.

The aqueous fire-retardant composition (B) was mixed with the aqueous resin solution (A) in an amount so as to obtain an aqueous intumescent composition (C) having a mass ratio (a_{A}):((b)+(c)) (solids content derived from the aqueous resin solution (A) to fire-retardant component derived from the aqueous fire-retardant composition (B)) of 1:1.3.

### Example 4

An acid donor composition was prepared by mixing the types and relative amounts of acid donor components and the functional compound silicon dioxide as indicated in Table 1.

A carbon donor composition was prepared by mixing the types and relative amounts of carbon donor components as indicated in Table 1.

80 parts by weight of the acid donor composition were mixed with 20 parts by weight of the carbon donor composition. 65 parts by weight of the resulting mixture were alternatingly combined with 35 parts by weight of deionized water, followed by mixing with a dispersion mixer for 10 minutes, so as to obtain an aqueous fire-retardant composition (B) in the form of a suspension.

An aqueous resin composition (A) having a melamine content of about 29% and a solids content (a_{A}) of 65% was prepared by mixing 52 parts by weight of Kauramin^{®} 650 (BASF) having a melamine content of 55% and 26.3 parts by weight of deionized water. Thereafter, 21.7 parts by weight of a 60% aqueous solution of Bakelite^{®} PF 1981 HD (HEXION) were added while stirring the mixture.

The aqueous fire-retardant composition (B) was mixed with the aqueous resin solution (A) in an amount so as to obtain an aqueous intumescent composition (C) having a mass ratio (a_{A}):((b)+(c)) (solids content derived from the aqueous resin solution (A) to fire-retardant component derived from the aqueous fire-retardant composition (B)) of 1:1.3.

### Example 5

An acid donor composition was prepared by mixing the types and relative amounts of acid donor components and the functional compound silicon dioxide as indicated in Table 1.

A carbon donor composition was prepared by mixing the types and relative amounts of carbon donor components as indicated in Table 1.

80 parts by weight of the acid donor composition were mixed with 20 parts by weight of the carbon donor composition. 65 parts by weight of the resulting mixture were alternatingly combined with 35 parts by weight of deionized water, followed by mixing with a dispersion mixer for 10 minutes, so as to obtain an aqueous fire-retardant composition (B) in the form of a suspension.

An aqueous resin composition (A) having a melamine content of about 29% and a solids content (a_{A}) of 65% was prepared by mixing 52 parts by weight of Kauramin^{®} 650 (BASF) having a melamine content of 55% and 6.5 parts by weight of Kaurit^{®} 390 (BASF) with 30.7 parts by weight of deionized water. Thereafter, 10.8 parts by weight of a 60% aqueous solution of Bakelite^{®} PF 1981 HD (HEXION) were added while stirring the mixture.

The aqueous fire-retardant composition (B) was mixed with the aqueous resin solution (A) in an amount so as to obtain an aqueous intumescent composition (C) having a mass ratio (a_{A}):((b)+(c)) (solids content derived from the aqueous resin solution (A) to fire-retardant component derived from the aqueous fire-retardant composition (B)) of 1:1.3.

### Comparative Example 1

80 parts by weight of ammonium polyphosphate (APP SD2 -Ecochem) were mixed with 20 parts by weight of pentaerythritol (Penta F40 - Ecochem). 65 parts by weight of the obtained mixture were alternatingly combined with 35 parts by weight of deionized water, followed by mixing with a dispersion mixer for 10 minutes, so as to obtain an aqueous fire-retardant composition (B) in the form of a suspension.

An aqueous resin solution (A) having a melamine content of about 16% and a solids content (a_{A}) of 65% was prepared by mixing 29.2 parts by weight of Kauramin^{®} 650 (BASF) having a melamine content of 55% and 17.9 parts by weight of Kaurit^{®} 390 (BASF) with 23.1 parts by weight of deionized water. Thereafter, 29.8 parts by weight of a 60% aqueous solution of Bakelite^{®} PF 1981 HD (HEXION) were added while stirring the mixture.

An aqueous intumescent composition (C) was prepared by mixing the aqueous fire-retardant composition (B) into the aqueous resin solution (A) under stirring in an amount so as to realize a mass ratio (a_{A}):((b)+(c)) (solids content derived from the aqueous resin solution (A) to fire-retardant component derived from the aqueous fire-retardant composition (B)) of 1:1.3.

**Table 1 - FR Compositions**

| | | **Example 1** | **Example 2** | **Example 3** | **Example 4** | **Example 5** | **Comp. Ex. 1** |
|---|---|---|---|---|---|---|---|
| **Acid donor composition (Parts by weight)** | APP¹ | 100 | 100 | 90 | 90 | 90 | 100 |
| | Guanyl phosphate | | | 8 | 8 | 8 | |
| | Guanylurea phosphate | | | 1 | 1 | 1 | |
| | Silicon dioxide² (functional compound) | | | 1 | 1 | 1 | |
| **Carbon donor composition (Parts by weight)** | Pentaerythritol³ | 100 | 100 | 75 | 75 | 75 | 100 |
| | Erythritol | | | 15 | 15 | 15 | |
| | Sorbitol | | | 10 | 10 | 10 | |
| **Mass ratio (b):(c) in aqueous fire-retardant composition (B)** | | 4:1 | 4:1 | 4:1 | 4:1 | 4:1 | 4:1 |
| **Relative amounts of resin components (Parts by weight)** | MF⁴ | 100 | 100 | 80 | 80 | 80 | 45 |
| | UF⁵ | | | 20 | | 10 | 27.5 |
| | PF⁶ | | | | 20 | 10 | 27.5 |
| **Solids content (a_{A})of resin composition (A)** | | 65% | 65% | 65% | 65% | 65% | 65% |
| **Melamine content of resin composition (A)** | | 36% | 36% | 29% | 29% | 29% | 16% |
| **Mass ratio (a_{A}):((b)+(c))** | | 1 : 1.3 | 1 : 1.3 | 1 : 1.3 | 1 : 1.3 | 1 : 1.3 | 1 : 1.3 |
| **Aqueous intumescent composition (C)** | | C1 | C2 | C3 | C4 | C5 | C6 |

| | | | | | | | |
|---|---|---|---|---|---|---|---|
| ¹ APP F72 SD2 (Ecochem) ² Orisil^{®} 200 ³ Penta F40 (Ecochem) ⁴ Kauramin^{®} 650 (BASF) ⁵ Kaurit^{®} 390 (BASF) ⁶ Bakelite^{®} PF 1981 HD (HEXION) | | | | | | | |

### Testing of aqueous intumescent composition (C)

### Indirect coating

### Preparation of intumescent carrier

65 parts by weight of Kauramin^{®} 650 having a melamine content of 55% were mixed into 35 parts by weight of deionized water to obtain an aqueous resin solution.

A soda kraft paper was passed through the aqueous resin solution to impregnate the paper with the resin solution. Excess resin solution was removed from the surface of the impregnated kraft paper using a squeegee. Subsequently, an aqueous intumescent composition (C1) as prepared according to Example 1 was applied to one side of the impregnated kraft paper using a brush and the treated kraft paper was dried in a drying oven at 80°C so as to reduce the moisture content of the treated kraft paper to 6-7%. The moisture content was assessed using an infrared moisture analyzer (Sartorius MA 35; 80°C, 16 minutes).

By this method, a first treated kraft paper (TKP1) carrying a combined amount of acid donor (b) and carbon donor (c) of 40 g/m², a second treated kraft paper (TKP2) carrying a combined amount of acid donor (b) and carbon donor (c) of 60 g/m², and a third treated kraft paper (TKP3) carrying a combined amount of acid donor (b) and carbon donor (c) of 80 g/m² were prepared.

### Testing of intumescent carrier

### Examples 6

A treated decorative panel was prepared by stacking a sheet of a common pre-impregnated decorative paper (200 g/m²), a sheet of a first intumescent carrier (TKP1) with the intumescence-carrying side facing the decorative paper, a sheet of a second intumescent carrier (TKP2) with the intumescence-carrying side facing the first intumescent carrier, a substrate (PB), a sheet of a third intumescent carrier (TKP2) with the intumescence-carrying side facing away from the substrate, a sheet of a fourth intumescent carrier (TKP1) with the intumescence-carrying side facing away from the third intumescent carrier and a common pre-impregnated decorative paper (200 g/m²) in this order and passing the assembled elements through a press (Bürkle Laborpresse). The fire test of the treated product was performed according to the standard UNI 9174 (2010).

### Examples 7

A treated decorative panel was prepared by stacking a sheet of a common pre-impregnated decorative paper (200 g/m²), a sheet of a first intumescent carrier (TKP1) with the intumescence-carrying side facing the decorative paper, a sheet of a second intumescent carrier (TKP3) with the intumescence-carrying side facing the first intumescent carrier, a substrate (PB), a sheet of a third intumescent carrier (TKP3) with the intumescence-carrying side facing away from the substrate, a sheet of a fourth intumescent carrier (TKP1) with the intumescence-carrying side facing away from the third intumescent carrier and a common pre-impregnated decorative paper (200 g/m²) in this order and passing the assembled elements through a press (Bürkle Laborpresse). The fire test of the treated product was performed according to the standard UNI 9174 (2010).

### Examples 8

A treated decorative panel was prepared by stacking a sheet of a common pre-impregnated decorative paper (200 g/m²), a sheet of a first intumescent carrier (TKP2) with the intumescence-carrying side facing the decorative paper, a sheet of a second intumescent carrier (TKP2) with the intumescence-carrying side facing the first intumescent carrier, a substrate (CB), a sheet of a third intumescent carrier (TKP2) with the intumescence-carrying side facing away from the substrate, a sheet of a fourth intumescent carrier (TKP2) with the intumescence-carrying side facing away from the third intumescent carrier and a common pre-impregnated decorative paper (200 g/m²) in this order and passing the assembled elements through a press (Bürkle Laborpresse). The fire test of the treated product was performed according to the standard UNI 9174 (2010).

### Examples 9

A treated decorative panel was prepared by stacking a sheet of a common pre-impregnated decorative paper (200 g/m²), a sheet of an intumescent carrier (TKP3) with the intumescence-carrying side facing the decorative paper, a substrate (MDF), a further sheet of the intumescent carrier (TKP3) with the intumescence-carrying side facing away from the substrate and a common pre-impregnated decorative paper (200 g/m²) in this order and passing the assembled elements through a press (Bürkle Laborpresse). The fire test of the treated product was performed according to the standard UNI 9174 (2010).

**Table 3 - Results of indirect coating FR tests**

| **Indirect coating** | | | | | | |
|---|---|---|---|---|---|---|
| | | | **Example 6** | **Example 7** | **Example 8** | **Example 9** |
| **Decorative panel layout** | **Covering layer** | | decorative paper | decorative paper | decorative paper | decorative paper |
| | **Intumescent carrier 4** | | TKP1 | TKP1 | TKP2 | - |
| | **Intumescent carrier 3** | | TKP2 | TKP3 | TKP2 | TKP3 |
| | **Substrate** | | PB of type P2 | PB of type P2 | CB of type HPL | MDF of type MDF according to EN 622-5 |
| | **Intumescent carrier 2** | | TKP2 | TKP3 | TKP2 | TKP3 |
| | **Intumescent carrier 1** | | TKP1 | TKP1 | TKP2 | - |
| | **Covering layer** | | decorative paper | decorative paper | decorative paper | decorative paper |
| **Total coating amount (a)+(b) (g/m² per side of substrate)** | | | 100 | 120 | 120 | 80 |
| **Flame Height/ Flame spread** | | 30 s | 2 cm/30 mm | 2 cm/30 mm | = frame/30 mm | 2 cm/30 mm |
| | | 120 s | < frame/30 mm | < frame/30 mm | < frame/40 mm | < frame/40 mm |
| **(UNI 9174)** | | 150 s | | | | < frame/40 mm |
| | | 240 s | | | | 4 cm/50 mm |
| | | 360 s | 10 cm/60 mm | 4 cm/50 mm | 4 cm/40 mm | 10 cm/50 mm |
| | | 480 s | 10 cm/60 mm | 7 cm/50 mm | 9 cm/40 mm | 12 cm/60 mm |

Flame height values: "< frame" indicates that the flame did not exceed the height of the frame of the specimen holder; "= frame" indicates that the flame height was equal to the height of the frame of the specimen holder; numerical values indicate a height of the flame above the frame of the specimen holder.

### Results of testing

When testing the fire-retardancy of a sample according to UNI 9174 test conditions, a flame spread value that does not exceed a value of 200 mm will usually yield a rating of "Class 1", which is the highest rating that can be achieved when testing according to UNI 9174.

It is the inventors' experience that samples which perform well under UNI 9174 test conditions generally also will perform well under DIN EN 13823 (SBI) test conditions, and that a correlation can be constructed between the results of the two types of tests. A flame height in the first 2 minutes of ≤ 10 cm above the frame height of the specimen holder under UNI 9174 test conditions generally is indicative of quite good fire-retardant properties and typically correlates to a FIGRA value under DIN EN 13823 test conditions as required for classification as Euroclass B. Furthermore, a flame spread ≥ 200 mm and/or a flame height of ≥ 12 cm above the frame height of the specimen holder in the first 2 minutes generally indicates that one or both of the threshold values of THR and FIGRA that are required for a classification as Euroclass B will be exceeded.

Based on the correlation between the results of testing under UNI 9174 test conditions and testing under DIN EN 13823 test conditions, it can be predicted with a high degree of certainty that the fired-retardant properties of the treated products obtained in Examples 6-8 also satisfy the requirements for classification as Euroclass B and that the fired-retardant properties of the treated product obtained in Examples 9 will be near the boundary between properties classified as Euroclass B and properties classified as Euroclass C, both of which classifications describe a condition of low flammability.

In addition to the experiments that are described in detail above, further experiments wherein differing coating amounts were applied to a substrate were carried out (by indirect coating). When assessing the fire-retardant properties of the treated substrates it was found that the use of a total coating amount of 100-120 g/m² generally made possible a classification according to DIN EN 13823 (2015) of Euroclass B when indirectly coating a substrate. The mentioned coating amounts refer to an amount coated on any given side of a substrate, applied as one or more layers.

Experiments making use of commercially available aqueous resin solutions (e.g. a Kauramin^{®}-type as obtained from BASF) also were carried out. The results of these experiments agreed with the results that were obtained when employing powder type resins components.

### Examples 10

The processing of the impregnated decorative paper into a flame-retardant treated panel is carried out according to the DPL process. Two variants of panels are described below:
A chipboard has a layered structure as follows:
   - chipboard type E1 P2, thickness 12 mm
   - 1 layer of core paper as impregnate according to the above description with flame retardant additives.
   - 1 layer of decorative paper with a basis weight of 65 g/m², whereby the decorative paper is impregnated with MUF resin with a degree of resination of 85%. The weight per unit area including resin and residual moisture of approx. 6.5% is 112 g/m².

The layer structure is pressed in a heated cycle press at a pressure of 40 kg/cm² for a pressing time of 50 sec.

The panel obtained achieves class B-s2;d0 after testing according to standard EN 13 823 (SBI test) and classification according to standard EN 13 501-1.

A compact panel has a layered structure:
- 48 layers NK 215 impregnated with PF resin
- 1 Core paper layer as impregnate according to the above description with flame retardant additives
- 1 layer of decorative paper with a basis weight of 65 g/m², whereby the decorative paper is impregnated with MUF resin with a degree of resination of 85%. The weight per unit area including resin and residual moisture of approx. 6.5% is 112 g/m².

The layer structure is pressed in a heated cycle press at a pressure of 54 kg/cm² for a pressing time of 250 sec.

After testing according to the EN 13 823 standard (SBI test), the panel obtained achieves classification according to standard EN 13 501-1 class B-s2;d0.

In the following, various alternatives of layer structures of floor panels with impregnates according to the invention are given. The top layer in each case is mentioned first and then follows in the respective order the other layers up to the lowest layer as the last. Furthermore, the kraft paper with flame retardant additives represents an impregnate and the decorative paper a decorative layer.

Floor panel with Direct Pressure Laminate 1 (DPL 1)
- Overlay paper
- Decorative paper
- Kraft paper with flame retardant additives
- High density fibreboard (HDF)
- Counteracting layer

Floor panel with Direct Pressure Laminate 2 (DPL 2)
- Overlay paper
- Decorative paper
- Kraft paper with flame retardant additives
- High density fibreboard (HDF)
- Kraft paper with flame retardant additives
- Counteracting layer

Cork flooring panel 1 (cork layer flooring)
- decorative layers (top coat, digital print, base coat)
- Cork layer
- Polyurethane (PUR) Adhesive joint
- Kraft paper with flame retardant additives
- High density fibreboard (HDF)
- Polyurethane (PUR) Adhesive joint
- Cork layer

Cork flooring panel 2 (cork layer flooring)
- Decorative coatings (top coat, digital print, base coat)
- cork layer
- Polyurethane (PUR) Adhesive joint
- Kraft paper with flame retardant additives
- High density fibreboard (HDF)
- Kraft paper with flame retardant additives
- Polyurethane (PUR) Adhesive joint
- Cork layer

Design floor panel 1
- UV top coat
- Structural film made of polypropylene (PP) or thermoplastic polyurethane (TPU)
- TPU adhesive joint
- Decorative paper
- Kraft paper with flame retardant additives
- High density fibreboard (HDF)
- Counteracting layer
- TPU adhesive joint
- Cork layer (as integrated impact sound mat)

Design floor panel 2
- UV topcoat
- PP or TPU structure film
- TPU adhesive joint
- Decorative paper
- Kraft paper with flame retardant additives
- High density fibreboard (HDF)
- Counteracting layer
- TPU adhesive joint

Design floor panel 3
- UV topcoat
- PP or TPU structure film
- TPU adhesive joint
- Decorative paper
- Kraft paper with flame retardant additives
- High density fibreboard (HDF)
- Kraft paper with flame retardant additives
- Counteracting layer
- TPU adhesive joint
- Cork layer (as integrated impact sound mat)

Design floor panel 4
- UV top coat
- PP or TPU structure film
- TPU adhesive joint
- Decorative paper
- Kraft paper with flame retardant additives
- High density fibreboard (HDF)
- Kraft paper with flame retardant additives
- Counteracting layer
- TPU Adhesive joint

### Example 11

The reaction to fire classification of 80 - 100 g/m² of FRA was determined without additional melamine-based resin on top. For the paper layer NK 120 (Natron Kraft Paper with a square weight of 120 g/m²), was used. Tests were conducted according to EN ISO 11925-2 and EN 13823. Thresholds were determined according to EN 13501-1.

**Table 4- Product parameters of the intumescent carrier with decorative paper**

| **Product parameters** | **Value** |
|---|---|
| Total thickness | 13-39 mm |
| Weight per unit area | 9,5-25 kg/m² |
| Thickness of wood substrate | 12-38 mm |
| Thickness of facing | 0,3 mm |
| Grammage of decorative paper | 60-125 g/m² |
| Grammage of fire retardant layer (per side) | 120 g/m² |
| gross density of the substrate | 600-825 kg/m³ |
| Formaldehyde niveaus | E1, E1E05 |
| Technical classes | Particle board: P2, MR, P3; MDF: ST Fire-retardant and decorative |
| Coating system | impregnation |
| Resin | MF resin or MUF resin |
| Tested colors | Red, white, black, wood look |

The result of the single flame source test, according to EN ISO 11925-2, indicated in 62 total tests that the maximum value was 70 mm and that no flaming droplets were formed.

The Fire Growth Rate after reaching a THR threshold of 0.2 MJ and 0.4 MJ, the total heat release during the first 600 seconds of flame impingement, the Smoke Growth Rate, the total smoke production during the first 600 seconds of flame impingement, the lateral spread of flame and flaming droplets are reported in Table 5. The product is classified, according to EN 13501-1:2018, section 11, as B-s2,d0.

**Table 5- SBI test results**

| **Parameter** | **Test results (average)** | **Thresholds acc. to EN 13501-1** |
|---|---|---|
| FIGRA_{0.2MJ} | 73 W/s | A2: < 120 W/s |
| FIGRA_{0.4MJ} | 41 W/s | C: < 250 W/s |
| THR₆₀₀ₛ | 5,8 MJ | A2: < 7,5 MJ |
| SMOGRA | 5 m²/s² | s1: < 30 m²/s²; s2: < 180 m²/s² |
| TSP₆₀₀ₛ | 71 m² | s1: < 50 m²; s2: < 200 m² |
| FDP | d0 | d0: no flaming |
| LSF | Compliant | Sample edge not reached |

## Claims

1. A method for imparting fire-retardancy on a wood- or cellulose-based material, comprising the steps of:
(1) introducing a flame-retardant additive, said flame-retardant additive comprising an acid donor (b) and a carbon donor (c), into an aqueous resin solution (A) to obtain an aqueous intumescent composition (C),
(2) coating a carrier being a kraft paper with the aqueous intumescent composition (C) to obtain an intumescent carrier, and
(3) laminating one or more layers of the intumescent carrier together with a decorative paper onto the wood- or cellulose-based material in the named order.

2. The method according to claim 1, wherein the flame-retardant additive is contained in the aqueous resin composition as obtained in step (1) in the form of solid particles, wherein said particles have an average particle size of 1 to 500 µm.

3. The method according to claim 1 or 2, wherein the acid donor (b) and the carbon donor (c) of step (1) are employed in the form of particulate powders, wherein at least 90% of the particles present in said particulate powders have a particle size which is smaller than 100 µm.

4. The method according to any one of preceding claims 1-3, wherein step (2) is performed by spraying, pouring, squeegee coating, brush coating, or roller coating.

5. The method according to any one of preceding claims 1-4, wherein step (2) is divided into two or more steps of successively applying coating layers comprising smaller amounts of the aqueous intumescent composition (C).

6. The method according to any one of preceding claims 1-5, wherein step (2) is performed by subjecting only one side of kraft paper to coating with the aqueous intumescent composition (C).

7. The method according to claim 6, wherein step (2) comprises further arranging the kraft paper in such a manner as to make the intumescent-coated side thereof face away from the substrate.

8. The method according to any one of preceding claims 1-7, wherein the decorative paper is laminated onto one side of the wood- or cellulose-based material, and a counteracting paper is laminated onto the other side of the wood- or cellulose-based material.

9. The method according to any one of preceding claims 1-8, wherein multiple layers of intumescent carriers containing differing amounts of the intumescent composition are used, wherein said layers are arranged in a manner such that the amount of intumescent composition on neighboring layers successively decreases from the layer adjoining the wood- or cellulose-based material to the layer adjoining the decorative paper.

10. The method according to any one of preceding claims 1-9, wherein the aqueous intumescent composition is coated onto the carrier in a concentration of 20 to 100 g aqueous intumescent composition per 100 g carrier.

11. The method according to any one of preceding claims 1-10, wherein the flame-retardant additive is incorporated in an amount of 10 to 80 % based on the solids content of the resin.

12. The method according to any one of preceding claims 1-11, wherein the carrier is coated with the aqueous intumescent composition (C) on both sides.

13. The method according to any one of preceding claim 1-12, wherein the aqueous resin solution (A) is selected from the group consisting of aqueous melamine-formaldehyde resin solutions, aqueous melamine-urea-formaldehyde resin solutions, mixtures thereof and mixtures thereof with aqueous urea-formaldehyde resin solutions and/or aqueous phenol-formaldehyde resin solutions.

14. The method according to any one of preceding claims 1-13, wherein the aqueous resin solution (A) exhibits a total melamine content of from 20 to 45 wt.%, preferably from 25 to 35 wt.% relative to the total weight of the aqueous resin solution (A).

15. The method according to any one of preceding claims 1-14, wherein the acid donor (b) is selected from the group consisting of ammonium polyphosphate, guanylurea phosphate, guanidine phosphate and mixtures thereof.

16. The method according to any one of preceding claims 1-15, wherein the carbon donor (c) is selected from the group consisting of glucose, arabinose and other monosaccharides, lactose, maltose and other disaccharides, starch, cellulose, dextrin and other polysaccharides, sorbitol, erythritol, pentaerythritol, dipentaerythritol, tripentaerythritol, mannitol or other polyhydric alcohols and mixtures thereof.
